# EUROPEAN PATENT SPECIFICATION

(11) **EP 2 587 884 B1**
(45) Date of publication and mention of the grant of the patent: **22.08.2018**
(21) Application number: 10853494.2
(22) Date of filing: 29.09.2010
(51) Int. Cl.: H04W 36/02, H04W 76/10, H04W 76/30, H04W 88/08, H04W 88/18, H04W 92/04

(54) **S1 HANDOVER METHOD, DATA TRANSMISSION METHOD AND MOBILE COMMUNICATION SYSTEM**
S1-ÜBERGABEVERFAHREN, DATENÜBERTRAGUNGSVERFAHREN UND MOBILES KOMMUNIKATIONSSYSTEM
PROCÉDÉ DE TRANSFERT INTERCELLULAIRE S1, PROCÉDÉ DE TRANSMISSION DE DONNÉES ET SYSTÈME DE COMMUNICATION MOBILE

(30) Priority: 22.06.2010 CN 201010207469
(43) Date of publication of application: 01.05.2013
(73) Proprietor: ZTE Corporation, Shenzhen, Guangdong 518057 (CN)
(72) Inventor: WANG, Dafei, Shenzhen Guangdong 518057 (CN)
(74) Representative: Ilgart, Jean-Christophe
(86) International application number: PCT/CN2010/077482
(87) International publication number: WO 2011/160355

(56) References cited:
- EP-A1- 2 197 162
- WO-A1-2009/043308
- CN-A- 101 237 681
- CN-A- 101 400 156
- US-A1- 2008 259 873
- HUAWEI: "MME/UPE Relocation", 3GPP DRAFT; S2-070079, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Florence; 20070109, 9 January 2007 (2007-01-09), XP050258892, [retrieved on 2007-01-09]
- "3rd Generation Partnership Project; Technical Specification Group Services and System Aspects; General Packet Radio Service (GPRS) enhancements for Evolved Universal Terrestrial Radio Access Network (E-UTRAN) access (Release 10)", 3GPP STANDARD; 3GPP TS 23.401, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V10.0.0, 10 June 2010 (2010-06-10), pages 1-261, XP050441572, [retrieved on 2010-06-10]

## Description

### TECHNICAL FIELD

The disclosure relates to the field of mobile communication technology, and in particular to an S1 handover method, a data forwarding method in S1 handover, and a mobile communication system.

### BACKGROUND

S1 handover is a basic flow to ensure User Equipment (UE) mobility in a mobile communication system; and S1 handover can ensure continuity of user services as a UE moves between different mobile communication systems.

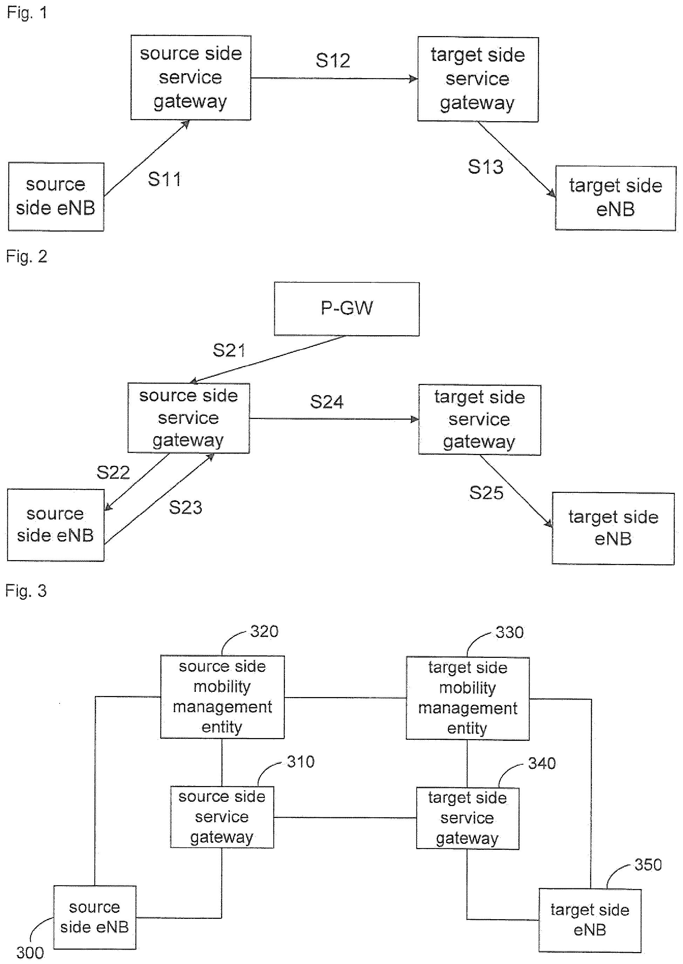

In an existing S1 handover process, it is in general necessary to perform data forwarding, which specifically includes that: a source side E-URTAN Node B (eNB) stops sending data to a UE and forwards data in a Packet Data Convergence Protocol (PDCP) buffer and data sent by an S1 interface to a target side eNB. Fig. 1 shows a schematic diagram of forwarding, by a source side eNB, data in a PDCP buffer to a target side eNB, and Fig. 2 shows a schematic diagram of forwarding, by a source side eNB, data sent by an S1 interface to a target side eNB. In Fig. 1, the data in the PDCP buffer is forwarded via a forward tunnel to a source side service gateway (S-GW)(S11), the source side serving gateway then forwards the data via a forward tunnel to a target side S-GW (S12), and then the target side S-GW forwards the data via a forward tunnel to a target side eNB (S13). In Fig. 2, a packet data network gateway (PDN Gateway, P-GW) sends data to a source side S-GW (S21), the source side S-GW sends the data via an S1 interface to a source side eNB (S22), the source side eNB forwards the data via a forward tunnel to a source side S-GW (S23), and the source side S-GW forwards the data via a forward tunnel to a target side S-GW (S24), and then the target side S-GW (S24) forwards the data via a forward tunnel to a target side eNB (S25).

It can be seen from the above data forwarding flow that the data forwarding flow in the existing S1 handover is rather complicated and is disadvantageous for the improvement of data forwarding efficiency.

EP2197162 A1 discloses that a method for forwarding downlink packets based on S1 handover. The method includes: numbering a packet not processed by using PDCP according to a message that carries PDCP Serial Number (SN) information if downlink packets to be forwarded include the packet not processed by using PDCP; and sending the downlink packets to the UE according to the PDCP SN corresponding to the packet included in the downlink packets.

HUAWEI: "MME/UPE Relocation", 3GPP DRAFT; S2-070079 discloses that if there is no S1 connection to the target eNode B, the source MME initiates the MME/UPE Relocation by sending a Relocation Required message to the target MME. The target MME requests the target UPE to allocate resource for the UE by sending a Resource Request to the target UPE.

### SUMMARY

Accordingly, the main purpose of the disclosure is to provide an S1 handover method, a data forwarding method in S1 handover, and a mobile communication system to improve data forwarding efficiency.

In order to solve the aforementioned technical problem, the technical solution of the disclosure is implemented as follows:
A data forwarding method in S1 handover, including the steps of: receiving, by a source side mobility management entity, a handover request, and sending, by the source side mobility management entity, a message to stop data sending to a source side service gateway; stopping, by the source side service gateway, sending data to a source side eNB after the source side service gateway receives the message to stop data sending, and caching, by the source side service gateway, the data; configuring, by the source side mobility management entity, a forward tunnel between a target side service gateway and the source side service gateway after the source side mobility management entity receives a Forward Relocation Response; and forwarding, by the source side service gateway, the cached data to a target side eNB via the forward tunnel and the target side service gateway;
wherein before the step of configuring, by the source side mobility management entity, a forward tunnel between the source side service gateway and a target side service gateway after the source side mobility management entity receives a Forward Relocation Response, the method may further include: sending, by the source side mobility management entity, a Forward Relocation Request to a target side mobility management entity; and configuring, by the target side mobility management entity, a forward tunnel between the target side service gateway and the source side service gateway, and sending, by the target side mobility management entity, a handover request to the target side eNB;
wherein before the step of sending a handover request to the target side eNB, the method may further include: sending, by the target side eNB, a Handover Request Acknowledge to the target side mobility management entity after the target side eNB configures a forward tunnel; and configuring, by the target side mobility management entity, a forward tunnel between the target side service gateway and the target side eNB, and sending, by the target side mobility management entity, the Forward Relocation Response to the source side mobility management entity.

Wherein before the step of receiving, by a source side mobility management entity, a handover request, the method may further include: sending, by the source side eNB, the handover request to the source side mobility management entity to notify the source side mobility management entity to start a handover.

Wherein after the step of forwarding, by the source side service gateway, the cached data to a target side eNB via the forward tunnel and the target side service gateway, the method may further include: gaining access, by a UE, from the target side eNB, and sending, by the UE, a Handover Confirm to the target side eNB; and sending, by the target side eNB, a Handover Notify to the target side mobility management entity.

The disclosure further discloses a mobile communication system, including a source side mobility management entity, a source side service gateway, a source side eNB, a target side service gateway, and a target side eNB, wherein: the source side mobility management entity is configured to receive a handover request, and send a message to stop data sending to the source side service gateway; the source side service gateway is configured to stop sending data to the source side eNB after receiving the message to stop data sending, and to cache the data; the source side mobility management entity is configured to configure a forward tunnel between the target side service gateway and the source side service gateway after receiving a Forward Relocation Response; and the source side service gateway is configured to forward the cached data to the target side eNB via the forward tunnel and the target side service gateway; wherein the mobile communication system may further include a target side mobility management entity, wherein the source side mobility management entity is further configured to send a Forward Relocation Request to the target side mobility management entity; and the target side mobility management entity is further configured to configure a forward tunnel between the target side service gateway and the source side service gateway, and to send a handover request to the target side eNB;
wherein the target side eNB may be further configured to send a Handover Request Acknowledge to the target side mobility management entity after configuring a forward tunnel; and the target side mobility management entity may be further configured to configure a forward tunnel between the target side service gateway and the target side eNB, and to send the Forward Relocation Response to the source side mobility management entity.

Wherein the source side eNB may be further configured to send the handover request to the source side mobility management entity to notify the source side mobility management entity to start a handover.

In the solution of the disclosure, the source side mobility management entity and the source side service gateway can acquire information of the occurrence of the handover in advance, such that there is no need to continue sending data to the source side eNB any longer, thereby the process of re-forwarding, by the source side eNB, data to the source side service gateway is omitted, and the resources for establishing and releasing a forward tunnel between the source side eNB and the source side service gateway are saved, and data forwarding efficiency is increased.

### BRIEF DESCRIPTION OF THE DRAWINGS

Fig. 1 is a schematic diagram of forwarding, by a source side eNB, data in a PDCP buffer to a target side eNB;
Fig. 2 is a schematic diagram of forwarding, by a source side eNB, data sent by an S1 interface to a target side eNB;
Fig. 3 is a schematic diagram of the structure of a mobile communication system according to an embodiment of the disclosure;
Fig. 4 is a schematic diagram of the flow of a data forwarding method in S1 handover according to an embodiment of the disclosure; and
Fig. 5a and Fig. 5b are schematic diagrams of the flow of S1 handover according to an embodiment of the disclosure.

### DETAILED DESCRIPTION

The realization of the aim, the functional characteristics, and the advantages of the disclosure will be further described in combination with the embodiments and with reference to the figures.

The overall technical solution of the disclosure is as follows: a source side mobility management entity (MME) receives a handover request (Handover Required) and sends a message to stop data sending to a source side service gateway; the source side service gateway stops sending data to a source side eNB after receiving the message to stop data sending, and caches the data; the source side mobility management entity configures a forward tunnel between a target side service gateway and the source side service gateway after receiving a Forward Relocation Response; and the source side service gateway forwards the cached data to a target side eNB via the forward tunnel and the target side service gateway. The technical solution of the disclosure is further described hereinafter with reference to both figures and specific embodiments.

Fig. 3 is a schematic diagram of the structure of a mobile communication system according to an embodiment of the disclosure. The mobile communication system in this embodiment includes a source side mobility management entity 320, a target side mobility management entity 330, a source side service gateway 310, a source side eNB 300, a target side service gateway 340, and a target side eNB 350.

The source side mobility management entity 320 is configured to receive a handover request, and send a message to stop data sending to the source side service gateway 310; the source side service gateway 310 is configured to stop sending data to the source side eNB 300 after receiving the message to stop data sending, and to cache the data; the source side mobility management entity 320 is configured to configure a forward tunnel between the target side service gateway 340 and the source side service gateway 310 after receiving a Forward Relocation Response; and the source side service gateway 310 is further configured to forward the cached data to the target side eNB 350 via the forward tunnel and the target side service gateway.

In another embodiment of the disclosure, the source side eNB 300 is further configured to send the handover request to the source side mobility management entity 320 to notify the source side mobility management entity 320 to start a handover.

The source side mobility management entity 320 is further configured to send a Forward Relocation Request to the target side mobility management entity 330; and the target side mobility management entity 330 is further configured to configure a forward tunnel between the target side service gateway 340 and the source side service gateway 310, and to send a handover request to the target side eNB 350.

The target side eNB 350 is further configured to send a Handover Request Acknowledge to the target side mobility management entity 330 after configuring a forward tunnel; and the target side mobility management entity 330 is further configured to configure a forward tunnel between the target side service gateway 340 and the target side eNB 350, and to send the Forward Relocation Response to the source side mobility management entity 320.

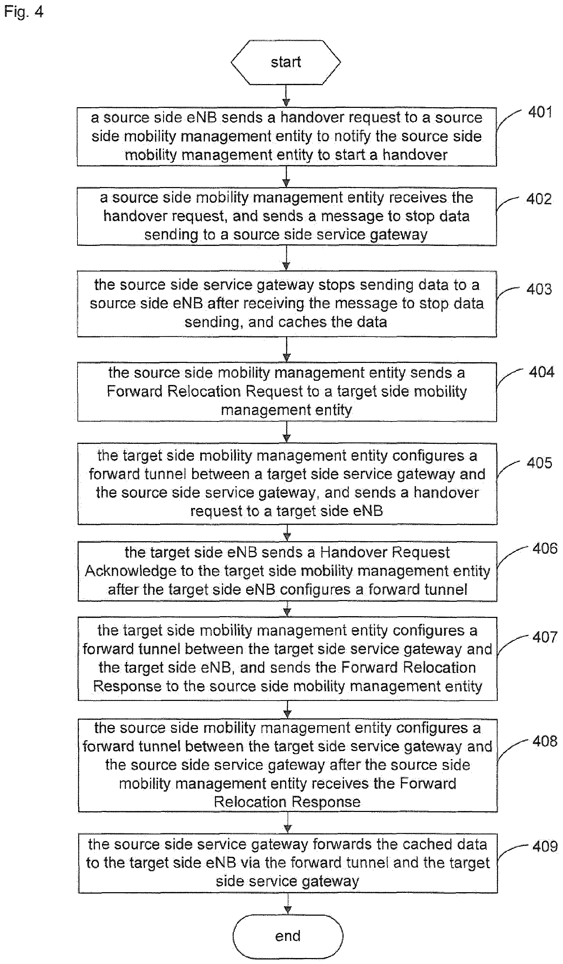

Fig. 4 is a schematic diagram of the flow of a data forwarding method in S1 handover according to an embodiment of the disclosure. In this embodiment, when the source side eNB 300 determines that a handover condition is met according to a measurement report, it enters the following flow:
Step 401. the source side eNB 300 sends a handover request to a source side mobility management entity 320 to notify the source side mobility management entity 320 to start a handover;
Step 402. the source side mobility management entity 320 receives the handover request, and then sends a message to stop data sending to a source side service gateway 310;
Step 403. the source side service gateway 310 stops sending data to the source side eNB 300 after the source side service gateway 310 receives the message to stop data sending, and caches the data;
Step 404. the source side mobility management entity 320 sends a Forward Relocation Request to a target side mobility management entity 330;
Step 405. the target side mobility management entity 330 configures a forward tunnel between a target side service gateway 340 and the source side service gateway 310 after receiving the Forward Relocation Request, and sends a handover request to a target side eNB 350;
Step 406. after the target side eNB 350 receives the handover request, the target side eNB 350 sends a Handover Request Acknowledge to the target side mobility management entity 330 after the target side eNB 350 configures a forward tunnel;
Step 407. the target side mobility management entity 330 configures a forward tunnel between the target side service gateway 340 and the target side eNB 350 after receiving the Handover Request Acknowledge, and sends the Forward Relocation Response to the source side mobility management entity 320;
Step 408. the source side mobility management entity 320 configures a forward tunnel between the target side service gateway 340 and the source side service gateway 310 after the source side mobility management entity 320 receives the Forward Relocation Response; and
Step 409. the source side service gateway 310 forwards the cached data to the target side eNB 350 via the forward tunnel and the target side service gateway 340. In this embodiment, the source side service gateway 310 first forwards cached data to the target side service gateway 340 via the forward tunnel, and the target side service gateway 340 then forwards the cached data to the target side eNB 350.

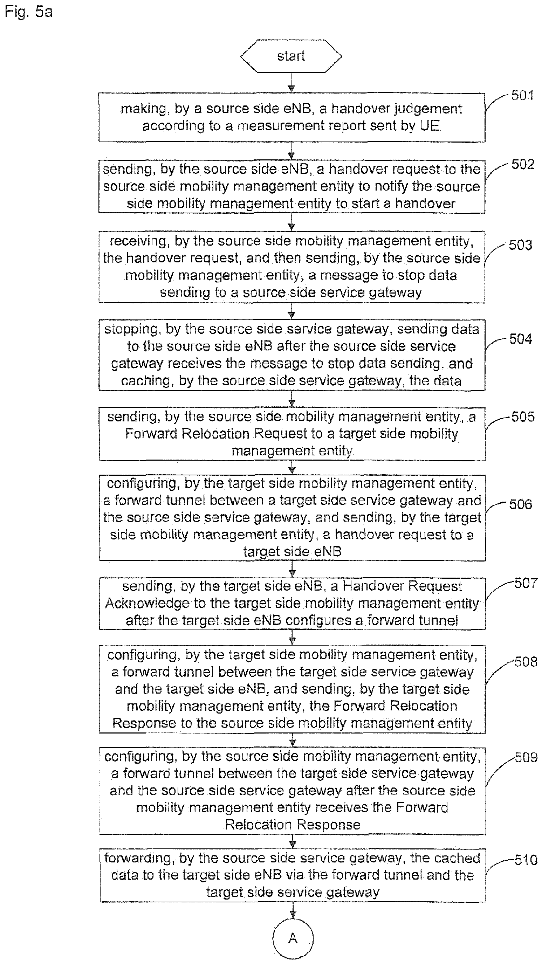

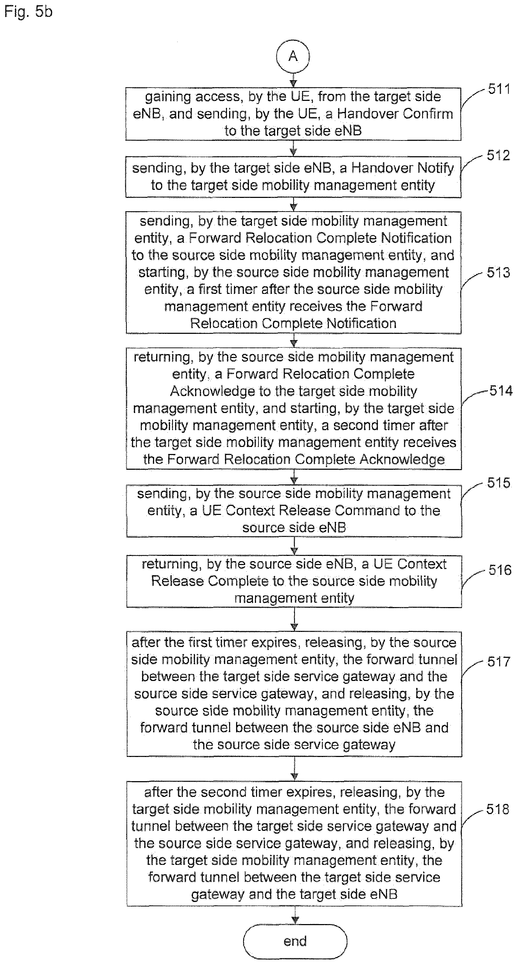

Fig. 5a and Fig. 5b are flowcharts of a S1 handover method according to an embodiment of the disclosure, which include the following steps:
   Step 501. making, by a source side eNB 300, a handover judgement according to a measurement report sent by UE; specifically, the UE sends the measurement report to the source side eNB 300, and the source side eNB 300 selects another eNB as a target side eNB 350 of the handover according to the measurement report; the source side eNB 300 enters Step 502 when it determines that the handover condition is met according to the measurement report;
   Step 502. sending, by the source side eNB 300, a handover request to a source side mobility management entity 320 to notify the source side mobility management entity 320 to start a handover;
   Step 503. receiving, by the source side mobility management entity 320, the handover request, and then sending, by the source side mobility management entity 320, a message to stop data sending to a source side service gateway 310;
   Step 504. stopping, by the source side service gateway 310, sending data to the source side eNB 300 after the source side service gateway 310 receives the message to stop data sending, and caching, by the source side service gateway 310, the data;
   Step 505. sending, by the source side mobility management entity 320, a Forward Relocation Request to a target side mobility management entity 330;
   Step 506. configuring, by the target side mobility management entity 330, a forward tunnel between a target side service gateway 340 and the source side service gateway 310 after the target side mobility management entity 330 receives the Forward Relocation Request, and sending, by the target side mobility management entity 330, a handover request to a target side eNB 350;
   Step 507. after the target side eNB 350 receives the handover request, sending, by the target side eNB 350, a Handover Request Acknowledge to the target side mobility management entity 330 after the target side eNB 350 configures a forward tunnel;
   Step 508. configuring, by the target side mobility management entity 330, a forward tunnel between the target side service gateway 340 and the target side eNB 350 after the target side mobility management entity 330 receives the Handover Request Acknowledge, and sending, by the target side mobility management entity 330, the Forward Relocation Response to the source side mobility management entity 320;
   Step 509. configuring, by the source side mobility management entity 320, a forward tunnel between the target side service gateway 340 and the source side service gateway 310 after the source side mobility management entity 320 receives the Forward Relocation Response;
   Step 510. forwarding, by the source side service gateway 310, the cached data to the target side eNB 350 via the forward tunnel and the target side service gateway 340; in this embodiment, the source side service gateway 310 first forwards the cached data to the target side service gateway 340 via the forward tunnel, and the target side service gateway 340 then forwards the cached data to the target side eNB 350;
   Step 511. gaining access, by the UE, from the target side eNB 350, and sending, by the UE, a Handover Confirm to the target side eNB 350;
   Step 512. sending, by the target side eNB 350, a Handover Notify to the target side mobility management entity 330 after the target side eNB 350 receives the Handover Confirm;
   Step 513. sending, by the target side mobility management entity 330, a Forward Relocation Complete Notification to the source side mobility management entity 320 after the target side mobility management entity 330 receives the Handover Notify, and starting, by the source side mobility management entity 320, a first timer after the source side mobility management entity 320 receives the Forward Relocation Complete Notification;
   Step 514. returning, by the source side mobility management entity 320, a Forward Relocation Complete Acknowledge to the target side mobility management entity 330, and starting, by the target side mobility management entity 330, a second timer after the target side mobility management entity 330 receives the Forward Relocation Complete Acknowledge;
   Step 515. sending, by the source side mobility management entity 320, a UE Context Release Command to the source side eNB 300;
   Step 516. returning, by the source side eNB 300, a UE Context Release Complete to the source side mobility management entity 320 after the source side eNB 300 receives the UE Context Release Command;
   Step 517. after the first timer expires, releasing, by the source side mobility management entity 320, the forward tunnel between the target side service gateway 340 and the source side service gateway 310, and releasing, by the source side mobility management entity 320, the forward tunnel between the source side eNB 300 and the source side service gateway 310; and
   Step 518. after the second timer expires, releasing, by the target side mobility management entity 330, the forward tunnel between the target side service gateway 340 and the source side service gateway 310, and releasing, by the target side mobility management entity 330, the forward tunnel between the target side service gateway 340 and the target side eNB 350. The whole S1 handover process completes up to this step.

The source side mobility management entity 320 and the source side service gateway 310 of the disclosure can acquire information of the occurrence of the handover in advance, such that there is no need to continue sending data to the source side eNB 300 any longer, thereby the process of re-forwarding, by the source side eNB 300, data to the target side service gateway 350 is omitted, and the resources for establishing and releasing a forward tunnel between the source side eNB 300 and the source side service gateway 310 are saved.

## Claims

1. A data forwarding method in S1 handover, comprising steps of:
receiving (S402), by a source side mobility management entity, a handover request, and sending (S402), by the source side mobility management entity, a message to stop data sending to a source side service gateway;
stopping (S403), by the source side service gateway, sending data to a source side E-URTAN Node B, eNB, after the source side service gateway receives the message to stop data sending, and caching (S403), by the source side service gateway, the data;
configuring (S408), by the source side mobility management entity, a forward tunnel between a target side service gateway and the source side service gateway after the source side mobility management entity receives a Forward Relocation Response; and
forwarding (S409), by the source side service gateway, the cached data to a target side eNB via the forward tunnel and the target side service gateway;
the method further comprising: before the step of configuring (S408), by the source side mobility management entity, a forward tunnel between the source side service gateway and a target side service gateway after the source side mobility management entity receives a Forward Relocation Response,
sending (S404), by the source side mobility management entity, a Forward Relocation Request to a target side mobility management entity; and
configuring (S405), by the target side mobility management entity, a forward tunnel between the target side service gateway and the source side service gateway, and sending (S405), by the target side mobility management entity, a handover request to the target side eNB; after the step of receiving (S405) a handover request to the target side eNB, sending (S406), by the target side eNB, a Handover Request Acknowledge to the target side mobility management entity after the target side eNB configures a forward tunnel; and
configuring (S407), by the target side mobility management entity, a forward tunnel between the target side service gateway and the target side eNB, and sending (S407), by the target side mobility management entity, the Forward Relocation Response to the source side mobility management entity.

2. The data forwarding method in S1 handover according to claim 1, further comprising: before the step of receiving, by a source side mobility management entity, a handover request,
sending (S401), by the source side eNB, the handover request to the source side mobility management entity to notify the source side mobility management entity to start a handover.

3. The data forwarding method in S1 handover according to claim 1, further comprising: after the step of forwarding, by the source side service gateway, the cached data to a target side eNB via the forward tunnel and the target side service gateway,
gaining (S511) access, by a User Equipment, UE, from the target side eNB, and sending, by the UE, a Handover Confirm to the target side eNB; and
sending, (S512) by the target side eNB, a Handover Notify to the target side mobility management entity.

4. A mobile communication system, comprising a source side mobility management entity (320), a source side service gateway (310), a source side E-UTRAN Node B, eNB (300), a target side service gateway (340), and a target side eNB (350), wherein:
the source side mobility management entity (320) is configured to receive a handover request, and send a message to stop data sending to the source side service gateway (310);
the source side service gateway (310) is configured to stop sending data to the source side eNB after receiving the message to stop data sending, and to cache the data;
the source side mobility management entity (320) is configured to configure a forward tunnel between the target side service gateway (340) and the source side service gateway (310) after receiving a Forward Relocation Response; and
the source side service gateway (310) is configured to forward the cached data to the target side eNB (350) via the forward tunnel and the target side service gateway (340);
the system further comprising a target side mobility management entity (330), wherein
the source side mobility management entity (320) is further configured to send a Forward Relocation Request to the target side mobility management entity (330); and
the target side mobility management entity (330) is configured to configure a forward tunnel between the target side service gateway (340) and the source side service gateway (310), and to send a handover request to the target side eNB (350);
wherein the target side eNB (350) is configured to send a Handover Request Acknowledge to the target side mobility management entity (330) after configuring a forward tunnel; and
the target side mobility management entity (330) is further configured to configure a forward tunnel between the target side service gateway (340) and the target side eNB (350), and to send the Forward Relocation Response to the source side mobility management entity (320).

5. The mobile communication system according to claim 4, wherein
the source side eNB (330) is further configured to send the handover request to the source side mobility management entity (320) to notify the source side mobility management entity (320) to start a handover.

## Patentansprüche

1. Daten-Übergabe-Verfahren bei S1- Übergabe, umfassend die folgenden Schritte: Empfangen (S402) einer Übergabe- Aufforderung durch eine Quellen- Seiten- Mobilitäts- Management- Einheit; Senden (402) einer Nachricht der Quellen- Seiten- Mobilitäts- Management- Einheit, um das Senden der Daten an einen Quellen- Seiten- Dienst- Gateway zu stoppen; Stoppen (S403) durch den Quellen- Seiten- Service- Gateway; Senden der Daten zu einer Quellenseite E-URTAN Knoten B (eNB), nachdem der Quellen- Seiten-Service- Gateway die Nachricht empfängt, das Senden der Daten zu stoppen und Speichern (S 403) der Daten durch den Quellen- Seiten- Service- Gateway; Gestalten (S408) durch die Quellen- Seiten- Mobilitäts- Management-Einheit eines Weiterleitungs- Tunnels zwischen einem Ziel- Seiten- Service-Gateway und dem Quellen- Seiten- Service- Gateway, nachdem die Quellen-Seiten- Mobilitäts- Management- Einheit eine Forward Relocation Response empfangen hat; und Weiterleiten (S409) der gespeicherten Daten durch den Quellen- Seiten- Service- Gateway an eine Zielseite eNB über den Weiterleitungs- Tunnel und den Ziel- Seiten- Service- Gateway; wobei das Verfahren die folgenden weiteren Schritte aufweist: bevor der Schritt des Gestaltens (S408) eines Weiterleitungs- Tunnels mit Hilfe der Quellen- Seiten- Mobilitäts- Management- Einheit zwischen dem Quellen- Seiten- Service- Gateway und einem Ziel- Seiten- Service- Gateway, nachdem die Quellen- Seiten-Mobilitäts- Management- Einheit eine Forward Relocation Response empfangen hat, senden (S404) durch die Quellen- Seiten- Mobilitäts- Management- Einheit eine Forward Relocation Request an eine Ziel- Seiten- Mobilitäts- Management- Einheit; und Gestalten (S405) durch die Ziel- Seiten- Mobilitäts- Management- Einheit einen Weiterleitungs- Tunnel zwischen dem Ziel- Seiten- Service- Gateway und dem Quellen- Seiten- Service- Gateway, und Senden (S405) durch die Ziel- Seiten- Mobilitäts- Management- Einheit eine Übergabe- Aufforderung an die Zielseite eNB; nach dem Schritt des Empfangens (S405) einer übergabe- Aufforderung an die Zielseite eNB Senden (S406) durch die Zielseite eNB eine übergabe- Aufforderungs- Bestätigung an die Ziel- Seiten- Mobilitäts- Management- Einheit, nachdem die Zielseite eNB einen Weiterleitungs- Tunnel aufgebaut hat; und Aufbauen (S407) durch die Ziel- Seiten- Mobilitäts- Management- Einheit eines Weiterleitungs-Tunnels zwischen dem Ziel- Seiten- Service- Gateway und der Zielseite eNB und Senden (S407) durch die Ziel- Seiten- Mobilitäts- Management- Einheit die Forward Relocation Response an die Quellen- Seiten- Mobilitäts- Management- Einheit.

2. Daten-Übergabe-Verfahren bei S1- Übergabe gemäß Anspruch 1, ferner umfassend: vor dem Schritt des Empfangens einer Übergabe- Aufforderung durch eine Quellen- Seiten- Mobilitäts- Management- Einheit Senden (S401) durch die Quellenseite eNB die Übergabe- Aufforderung an die Quellen- Seiten- Mobilitäts- Management- Einheit, um die Quellen- Seiten- Mobilitäts-Management- Einheit zu veranlassen, eine Übergabe zu starten.

3. Daten-Übergabe-Verfahren bei S1- Übergabe nach Anspruch 1, des weiteren umfassend: nach dem Schritt des Versendens durch den Quellen- Seiten-Service- Gateway der gespeicherten Daten an eine Zielseite eNB über den Weiterleitungs- Tunnel und den Ziel- Seiten- Service- Gateway, gewinnen (S511) eines Zugangs durch ein User Equipment (UE) von der Zielseite eNB und Senden durch das UE eine Übergabe- Bestätigung an die Zielseite eNB; und Senden (S512) durch die Zielseite eNB eine Übergabe- Mitteilung die Ziel- Seiten- Mobilitäts- Management- Einheit.

4. Mobiles Kommunikationssystem, umfassend eine Quellen- Seiten- Mobilitäts-Management- Einheit (320), einen Quellen- Seiten- Service- Gateway (310), einen Quellen- Seiten E-UTRAN, einen Knoten B, eNB (300), einen Ziel- Seiten- Service- Gateway (340) und eine Zielseite eNB (350), wobei die Quellen- Seiten- Mobilitäts- Management- Einheit (320) so gestaltet ist, daß sie eine Übergabe- Aufforderung empfängt und eine Nachricht sendet, um das Senden der Daten an den Quellen- Service- Gateway (310) zu stoppen; wobei ferner der quellenseitige Service- Gateway (310) dazu dient, das Senden der Daten an die Quellenseite eNB nach dem Empfangen der Nachricht zum Stoppen der Daten zu stoppen und die Daten zu speichern; wobei des weiteren die Quellen- Seiten- Mobilitäts- Management- Einheit (320) so gebaut ist, daß zwischen dem Ziel- Seiten- Service- Gateway (340) und dem Quellen-Seiten- Service- Gateway (310) nach Empfang einer Forward Relocation Response ein Weiterleitungs- Tunnel geschaffen wird; und wobei schließlich der Quellen- Seiten- Service- Gateway (310) so gebaut ist, daß die gespeicherten Daten an die Zielseite eNB (350) gesendet werden, und zwar über den Weiterleitungs- Tunnel und den Ziel- Seiten- Service- Gateway (340); wobei das System des weiteren eine Ziel- Seiten- Mobilitäts- Management-Einheit (330) umfaßt, in dem die Quellen- Seiten- Mobilitäts- Management-Einheit (320) des weiteren so gestaltet ist, daß eine Forward Relocation Request an die Ziel- Seiten- Mobilitäts- Management- Einheit (330) gesendet wird, und die Ziel- Seiten- Mobilitäts- Management- Einheit (330) so gestaltet ist, daß ein Weiterleitungs- Tunnel zwischen dem Ziel- Seiten- Service- Gateway (340) und dem Quellen- Seiten- Service- Gateway (310) entsteht und an die Zielseite eNB (350) eine Übergabe- Aufforderung gesendet wird; wobei die Zielseite eNB (350) so gebaut ist, daß eine Übergabe- Aufforderungs-Bestätigung an die Ziel- Seiten- Mobilitäts- Management- Einheit (330) nach Aufbau eines Weiterleitungs- Tunnels gesendet wird; und wobei die Ziel- Seiten- Mobilitäts- Management- Einheit (330) auch so gestaltet ist, daß zwischen dem Ziel- Seiten- Service- Gateway (340) und der Zielseite eNB (350) ein Weiterleitungs- Tunnel gebildet wird und die Forward Relocation Response an die Quellen- Seiten- Mobilitäts- Management- Einheit (320) gesendet wird.

5. Mobiles Kommunikationssystem nach Anspruch 4, **dadurch gekennzeichnet, daß** die Quellenseite eNB (330) auch so gestaltet ist, daß die Übergabe- Aufforderung an die Quellen- Seiten- Mobilitäts- Management- Einheit (320) gesendet wird, um die Quellen- Seiten- Mobilitäts- Management- Einheit (320) zu veranlassen, die Übergabe zu starten.

## Revendications

1. Procédé de réacheminement de données en transfert intercellulaire S1, comprenant des étapes de :
recevoir (S402), par une entité de gestion de mobilité côté source, une demande de transfert intercellulaire, et envoi (S402), par l'entité de gestion de mobilité côté source, un message pour arrêter l'envoi de données à une passerelle de service côté source ;
arrêter (S403), par la passerelle de service côté source, l'envoi de données à un Noeud B E-URTAN, eNB, côté source, après que la passerelle de service côté source reçoit le message pour arrêter l'envoi de données, et mettre en mémoire cache (S403), par la passerelle de service côté source, les données ;
configurer (S408), par l'entité de gestion de mobilité côté source, un tunnel de réacheminement entre une passerelle de service côté cible et la passerelle de service côté source après que l'entité de gestion de mobilité côté source reçoit une réponse de translation de réacheminement ; et
réacheminer (S409), par la passerelle de service côté source, les données mises en mémoire cache à un eNB côté cible via le tunnel de réacheminement et la passerelle de service côté cible ;
le procédé comprenant en outre : avant l'étape de configuration (S408), par l'entité de gestion de mobilité côté source, d'un tunnel de réacheminement entre la passerelle de service côté source et une passerelle de service côté cible après que l'entité de gestion de mobilité côté source reçoit une réponse de translation de réacheminement,
envoyer (S404), par l'entité de gestion de mobilité côté source, une demande de translation de réacheminement à une entité de gestion de mobilité côté cible ; et
configurer (S405), par l'entité de gestion de mobilité côté cible, un tunnel de réacheminement entre la passerelle de service côté cible et la passerelle de service côté source, et envoyer (S405), par l'entité de gestion de mobilité côté cible, une demande de transfert intercellulaire à l'eNB côté cible ;
après l'étape de réception (S405) d'une demande de transfert intercellulaire à l'eNB côté cible, envoyer (S406), par l'eNB côté cible, un accusé de réception de demande de transfert intercellulaire à l'entité de gestion de mobilité côté cible après que l'eNB côté cible configure un tunnel de réacheminement ; et
configurer (S407), par l'entité de gestion de mobilité côté cible, un tunnel de réacheminement entre la passerelle de service côté cible et l'eNB côté cible, et envoyer (S407), par l'entité de gestion de mobilité côté cible, la réponse de translation de réacheminement à l'entité de gestion de mobilité côté source.

2. Procédé de réacheminement de données en transfert intercellulaire S1 selon la revendication 1, comprenant en outre : avant l'étape de réception, par une entité de gestion de mobilité côté source, d'une demande de transfert intercellulaire,
envoyer (S401), par l'eNB côté source, la demande de transfert intercellulaire à l'entité de gestion de mobilité côté source pour notifier à l'entité de gestion de mobilité côté source de démarrer un transfert intercellulaire.

3. Procédé de réacheminement de données en transfert intercellulaire S1 selon la revendication 1, comprenant en outre : après l'étape de réacheminement, par la passerelle de service côté source, des données mises en mémoire cache à un eNB côté cible via le tunnel de réacheminement et la passerelle de service côté cible,
accéder (S511), par un équipement utilisateur, UE, depuis l'eNB côté cible, et envoyer, par l'UE, une confirmation de transfert intercellulaire à l'eNB côté cible ; et
envoyer (S512) par l'eNB côté cible, une notification de transfert intercellulaire à l'entité de gestion de mobilité côté cible.

4. Système de communication mobile, comprenant une entité de gestion de mobilité côté source (320), une passerelle de service côté source (310), un Noeud B E-UTRAN, eNB côté source (300), une passerelle de service côté cible (340), et un eNB côté cible (350), dans lequel :
l'entité de gestion de mobilité côté source (320) est configurée pour recevoir une demande de transfert intercellulaire, et envoyer un message pour arrêter l'envoi de données à la passerelle de service côté source (310) ;
la passerelle de service côté source (310) est configurée pour arrêter l'envoi de données à l'eNB côté source après la réception du message d'arrêter l'envoi de données, et pour mettre en mémoire cache les données ;
l'entité de gestion de mobilité côté source (320) est configurée pour configurer un tunnel de réacheminement entre la passerelle de service côté cible (340) et la passerelle de service côté source (310) après réception d'une réponse de translation de réacheminement ; et
la passerelle de service côté source (310) est configurée pour réacheminer les données mises en mémoire cache à l'eNB côté cible (350) via le tunnel de réacheminement et la passerelle de service côté cible (340) ;
le système comprenant en outre une entité de gestion de mobilité côté cible (330), dans lequel
l'entité de gestion de mobilité côté source (320) est en outre configurée pour envoyer une demande de translation de réacheminement à l'entité de gestion de mobilité côté cible (330) ; et
l'entité de gestion de mobilité côté cible (330) est configurée pour configurer un tunnel de réacheminement entre la passerelle de service côté cible (340) et la passerelle de service côté source (310), et pour envoyer une demande de transfert intercellulaire à l'eNB côté cible (350) ;
dans lequel l'eNB côté cible (350) est configuré pour envoyer un accusé de réception de demande de transfert intercellulaire à l'entité de gestion de mobilité côté cible (330) après configuration d'un tunnel de réacheminement ; et
l'entité de gestion de mobilité côté cible (330) est en outre configurée pour configurer un tunnel de réacheminement entre la passerelle de service côté cible (340) et l'eNB côté cible (350), et pour envoyer la réponse de translation de réacheminement à l'entité de gestion de mobilité côté source (320).

5. Système de communication mobile selon la revendication 4, dans lequel
l'eNB côté source (330) est en outre configuré pour envoyer la demande de transfert intercellulaire à l'entité de gestion de mobilité côté source (320) pour notifier à l'entité de gestion de mobilité côté source (320) de démarrer un transfert intercellulaire.
